# EUROPÄISCHE PATENTSCHRIFT

(11) **EP 0 556 635 B1**
(45) Veröffentlichungstag und Bekanntmachung des Hinweises auf die Patenterteilung: **14.01.1998**
(21) Anmeldenummer: 93101622.4
(22) Anmeldetag: 03.02.1993
(51) Int. Cl.: G01S 15/88, G01S 7/52, G01N 29/28

(54) **Ultraschallwanddickenmessvorrichtung, insbesondere für extrudierte Rohre**
Ultrasonic apparatus for measuring wall thickness, particularly for extruded tubes
Appareil de mesure de l'épaisseur de paroi, notamment pour tuyaux extrudés

(30) Priorität: 21.02.1992 DE 4205337
(43) Veröffentlichungstag der Anmeldung: 25.08.1993
(73) Patentinhaber: INOEX GmbH, D-32547 Bad Oeynhausen (DE)
(72) Erfinder: Diederichs, Rolf, 4900 Herford (DE)
(74) Vertreter: Cohausz & Florack Patentanwälte

(56) Entgegenhaltungen:
- DE-A- 2 039 389
- DE-A- 2 617 246
- DE-A- 4 019 865

## Beschreibung

Die Erfindung bezieht sich auf eine Ultraschallwanddickenmeßvorrichtung für insbesondere extrudierte Langprodukte, wie Rohre, mit mindestens einem in eine Durchlauföffnung für das Langprodukt aufweisenden Träger angeordneten Sensor, an dessen Sender- und Empfängerseite eine mit einer Kopplungsflüssigkeit füllbare, zur Durchlauföffnung hin offene Kammer vorgesehen ist, wobei in Durchlaufrichtung vor jedem Sensor und axial mit ihm in einer Flucht mindestens ein zur Durchlauföffnung hin offener Auslaß für die Kopplungsflüssigkeit vorgesehen ist.

Bei einer solchen auf dem Markt befindlichen Ultraschallwanddickenmeßvorrichtung (Prospekt der Firma INOEX GmbH, Borweg 27, D-4970 Bad Oeynhausen 1, "AUREX/USS-GEO" sind in dem Träger über dessen Umfang verteilt mehrere Sensoren angeordnet, denen eine gemeinsame Ringkammer zugeordnet ist. Bei in der Durchlauföffnung befindlichem Rohr schließt die Oberfläche des Rohres diese Ringkammer ab. Eine solche Ultraschallwanddickenmeßvorrichtung ist nicht nur zur Messung der Wanddicke, sondern auch zur Messung des Durchmessers des Rohres geeignet. Voraussetzung für eine fehlerfreie Messung mittels der Sensoren ist, daß die Kopplungsflüssigkeit blasenfrei ist. Diese Forderung ist an der Oberfläche des Rohres insbesondere dann nicht ohne weiteres zu erfüllen, wenn das Material des Langproduktes eine hohe Oberflächenspannung aufweist, wie es bei Materialien auf Polyolefinbasis der Fall ist. Um solche Meßfehler zu vermindern, ist schon bei der bekannten Meßvorrichtung am Eingang der Durchlauföffnung ein ringförmiger Auslaß für Kopplungsflüssigkeit vorgesehen. Durch diese Kopplungsflüssigkeit findet also schon eine erste Benetzung der Oberfläche des Langproduktes statt. In der Praxis hat sich aber gezeigt, daß selbst diese zusätzliche Maßnahme noch nicht zu zufriedenstellenden Ergebnissen führt.

Der Erfindung liegt die Aufgabe zugrunde, eine Ultraschallwanddickenmeßvorrichtung zu schaffen, bei der die durch Bläschenbildung an der Oberfläche des in der Wanddicke zu messenden Langproduktes bedingten Meßfehler weitgehendst eliminiert sind.

Diese Aufgabe wird bei einer Ultraschallwanddickenmeßvorrichtung der eingangs genannten Art dadurch gelöst, daß jeder der Kammer vorgeordnete Auslaß für die Kopplungsflüssigkeit als Spritzdüse an der Eingangsseite der Durchlauföffnung ausgebildet ist und gegen die Oberfläche des Langproduktes gerichtet ist.

Mit der erfindungsgemäßen Ultraschallwanddickenmeßvorrichtung wird aufgrund der kinetischen Energie der aufgespritzten Kopplungsflüssigkeit die Oberfläche des Langproduktes wirksam benetzt, so daß das Langprodukt im Bereich der Ultraschallmeßposition blasenfrei ist. Die erfindungsgemäße Ultraschallwanddickenmeßvorrichtung arbeitet deshalb mit einer im Vergleich zu den bekannten Meßvorrichtungen höheren Betriebssicherheit, d.h. keine Fehlmessungen.

Die Oberflächenbenetzung durch die aus jeder Spritzdüse austretenden Kopplungsflüssigkeit ist besonders wirksam, wenn die Spritzrichtung jeder Spritzdüse geneigt zur Oberfläche des Langproduktes ist und eine gegen die Laufrichtung gerichtete Komponente hat. Bei dieser Spritzrichtung werden Blasen von der Oberfläche des Langproduktes vor der Durchlauföffnung weggetrieben.

Nach einer weiteren Ausgestaltung der Erfindung sollte die Eingangsseite der Durchlauföffnung, in der jede Spritzdüse angeordnet ist, konisch bzw. trichterförmig ausgebildet sein. Die einzelnen Spritzdüsen können auch durch einen Spritzring ersetzt werden.

Im folgenden wird die Erfindung anhand einer ein Ausführungsbeispiel darstellenden Zeichnung näher erläutert.

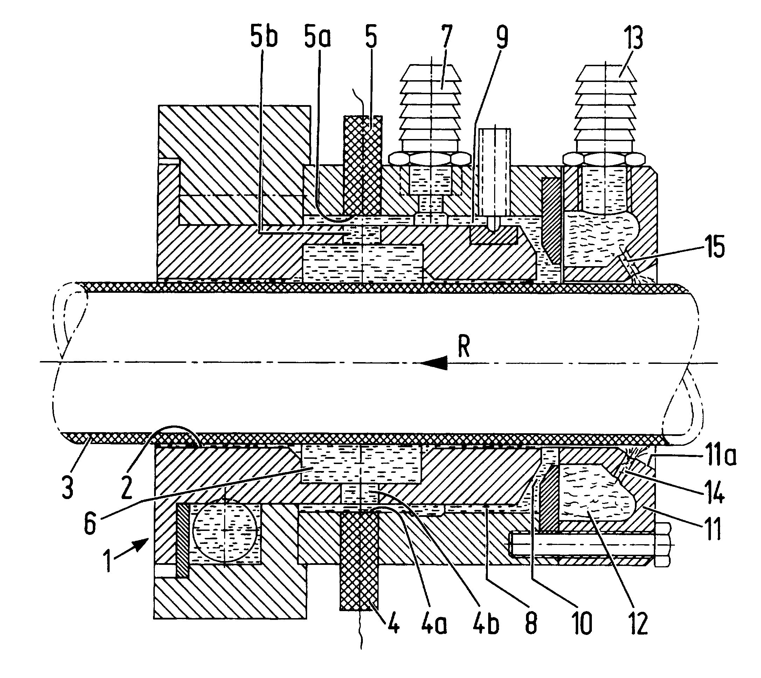

Die Zeichnung zeigt eine Ultraschallwanddickenmeßvorrichtung im Axialschnitt.

In einem Träger 1 ist eine Durchlauföffnung 2 für ein Langprodukt, hier ein extrudiertes Rohr 3, ausgebildet. In dem Träger 1 sind über den Umfang verteilt mehrere Ultraschallsensoren 4, 5 eingesetzt. Die stirnseitigen Sender- und Empfängerseiten 4a, 5a der Sensoren 4, 5 sind einer im Träger 1 ausgebildeten ringförmigen Kammer 6 zugekehrt, die zur Durchlauföffnung 2 hin offen ist. Zwischen dieser Kammer 6 und den Sender- und Empfängerseiten 4a, 5a, sind radiale Verbindungsbohrungen 4b, 5b im Träger 1 ausgebildet. Über eine gemeinsame Zuleitung 7 und axiale, in die Verbindungsöffnungen 4b, 5b einmündende Kanäle 8, 9 wird ein Kopplungsmedium, z.B. Wasser, in die Kammer 6 geleitet. Das Kopplungsmedium füllt den gesamten radialen Raum zwischen der Oberfläche des Rohres 3 und den Sender- und Empfängerseiten 4a, 5a der Sensoren 4, 5 aus. Die axialen Kanäle 8, 9 münden ferner in einen in Durchlaufrichtung R des Rohres 3 der Kammer 6 vorgelagerten Ringraum 10, über den Kopplungsflüssigkeit auf die Oberfläche des Rohres 3 gebracht wird.

Die so weit beschriebene Ultraschallwanddickenmeßvorrichtung ist Stand der Technik.

Neu gegenüber dem Stand der Technik ist, daß eingangsseitig der Träger 1 einen Ring 11 mit einer trichterförmigen Eingangsseite 11a trägt. In dem Ring 11 ist ein Ringraum 12 ausgebildet, dem über eine Zuleitung 13 Kopplungsflüssigkeit unter Druck zugeführt wird. Im Bereich der trichterförmigen Eingangsseite 11a sind eine Vielzahl von Spritzdüsen 14, 15 angeordnet, die aus dem Ringraum 12 gespeist werden. Die Spritzrichtung dieser Spritzdüsen 14, 15 ist zur Oberfläche des Rohres 3 geneigt und hat eine gegen die Durchlaufrichtung R weisende Strömungskomponente. Dadurch werden an der Oberfläche des Rohres 3 sich bildende Luftbläschen von der Rohroberfläche weggetrieben.

Die besonderen mit der Erfindung erzielten Vorteile bestehen darin, daß auch bei problematischen Materialien, wie solche auf Polyolefinbasis, eine fehlerfreie Ankopplung der Sensoren an das zu messende Produkt gewährleistet wird. Die dafür eingesetzten Mittel, nämlich die Spritzdüsen, machen die Oberfläche des Rohres blasenfrei und hinterlassen nicht wie mechanische Mittel, z.B. Bürsten oder Schwämme, an der empfindlichen Oberfläche des Rohres Riefen und Schleifspuren.

### Bezugszeichenliste

- 1: Träger
- 2: Durchlauföffnung
- 3: Rohr (Langprodukt)
- 4,5: Ultraschallsensoren
- 4a,5a: Sender- und Empfängerseiten
- 4b,5b: radiale Verbindungsbohrungen
- 6: Kammer
- 7: Zuleitung
- 8,9: Kanäle
- 10: Ringraum
- 11: Ring
- 11a: Eingangsseite der Durchlaßöffnung
- 12: Ringraum
- 13: Zuleitung
- 14,15: Spritzdüsen
- R: Durchlaufrichtung

## Patentansprüche

1. Ultraschallwanddickenmeßvorrichtung für insbesondere extrudierte Langprodukte, wie Rohre, mit mindestens einem in einem eine Durchlauföffnung (2) für das Langprodukt (3) aufweisenden Träger (1) angeordneten Sensor (4, 5), an dessen Sender- und Empfängerseite (4a, 5a) eine mit einer Kopplungsflüssigkeit füllbare, zur Durchlauföffnung (2) hin offene Kammer (6) vorgesehen ist, wobei in Durchlaufrichtung (R) vor jedem Sensor (4, 5) und axial mit ihm in einer Flucht mindestens ein zur Durchlauföffnung hin offener Auslaß (14, 15) für die Kopplungsflüssigkeit vorgesehen ist, **dadurch gekennzeichnet,** daß jeder Auslaß (14, 15) für die Kopplungsflüssigkeit als Spritzdüse an der Eingangsseite (11a) der Durchlaßöffnung (2) ausgebildet ist und gegen die Oberfläche des Langproduktes (3) gerichtet ist.

2. Ultraschallwanddickenmeßvorrichtung nach Anspruch 1, **dadurch gekennzeichnet,** daß die Spritzrichtung jeder Spritzdüse (14, 15) geneigt zur Oberfläche des Langproduktes (3) ist und eine gegen die Laufrichtung (R) gerichtete Strömungskomponente hat.

3. Ultraschallwanddickenmeßvorrichtung nach Anspruch 1 oder 2, **dadurch gekennzeichnet,** , daß die Eingangsseite (11a) der Durchlauföffnung, in der jede Spritzdüse (14, 15) angeordnet ist, konisch bzw. trichterförmig ausgebildet ist.

4. Ultraschallwanddickenmeßvorrichtung nach einem der Ansprüche 1 bis 3, **dadurch gekennzeichnet,** , daß statt der Spritzdüsen (14,15) ein Spritzring von 360° oder mehrere Spritzringsegmente in Teilen von 360° eingesetzt werden.

## Claims

1. An ultrasonic wall thickness measuring device for more particularly extruded elongate products, such as tubes, having at least one sensor (4, 5) which is disposed in a support (1) having a passage opening (2) for the elongate product (3) and on whose transmitter and receiver side (4a, 5a) a chamber (6) is provided which can be filled with coupling liquid and is open in the direction of the passage opening (2), while provided in the direction of passage (R) upstream of each sensor (4, 5) and axially therewith in alignment is at least one outlet (14, 15) for the coupling liquid which is open in the direction of the passage opening, characterized in that each outlet (14, 15) for the coupling liquid takes the form of a spraying nozzle on the input side (11a) of the passage opening (2) and is directed against the surface of the elongate product (3).

2. An ultrasonic wall thickness measuring device according to claim 1, characterized in that the spraying direction of each spraying nozzle (14, 15) is inclined to the surface of the elongate product (3) and has a component of flow directed against the direction of passage (R).

3. An ultrasonic wall thickness measuring device according to claims 1 or 2, characterized in that the input side (lla) of the passage opening in which each spraying nozzle (14, 15) is disposed is constructed conical or funnel-shaped.

4. An ultrasonic wall thickness measuring device according to one of claims 1 to 3, characterized in that a spraying ring of 360° or a number of spraying ring segments in portions of 360° is or are substituted for the spraying nozzles (14, 15).

## Revendications

1. Dispositif de mesure d'épaisseur de paroi par ultrasons notamment pour des produits longs extrudés comme des tubes, comprenant au moins un capteur (4,5) disposé dans un support (1) présentant une ouverture (2) de passage du produit long (3), une chambre (6) communiquant avec l'ouverture de passage (2) et pouvant être remplie d'un fluide de couplage étant prévue sur une face d'émission et de réception (4a, 5a) dudit capteur, dans lequel au moins une sortie (14, 15) pour le fluide de couplage communiquant avec l'ouverture de passage est prévue en aval de chaque capteur (4, 5), par rapport au sens de passage (R), et en alignement axial avec le capteur, caractérisé en ce que chaque sortie (14, 15) pour le fluide de couplage est réalisée comme une buse de pulvérisation sur la face d'entrée (11a) de l'ouverture de passage (2), cette buse étant orientée vers la surface du produit long (3).

2. Dispositif de mesure d'épaisseur de paroi par ultrasons selon la revendication 1, caractérisé en ce que l'orientation de pulvérisation de chaque buse de pulvérisation (14, 15) est inclinée par rapport à la surface du produit long (3) et a une composante de jet orientée de manière opposée au sens de passage (R).

3. Dispositif de mesure d'épaisseur de paroi par ultrasons selon la revendication 1 ou 2, caractérisé en ce que la face d'entrée (11a) de l'ouverture de passage, dans laquelle chaque buse de pulvérisation (14, 15) est prévue, a une forme en entonnoir ou conique.

4. Dispositif de mesure d'épaisseur de paroi par ultrasons selon l'une quelconque des revendications 1 à 3, caractérisé en ce qu'à la place des buses de pulvérisation (14, 15) un anneau de pulvérisation couvrant 360°, ou plusieurs segments d'un anneau de pulvérisation couvrant chacun une partie de 360° sont prévus.
